# DEMANDE DE BREVET EUROPEEN

(11) **EP 4 852 246 A1**
(43) Date de publication de la demande: **09.12.2026**
(21) Numéro de dépôt: 26182685.3
(22) Date de dépôt: 02.06.2026
(51) Int. Cl.: H02G 1/12

(54) **OUTIL DE CHANFREINAGE POUR CABLE A REGLAGE AMELIORE**

(30) Priorité: 04.06.2025 FR 2506033
(71) Demandeur: Alroc, 72160 Tuffe Val de la Cheronne (FR)
(72) Inventeur: BIDAULT, Sylvain, 72160 CONNERRE (FR)
(74) Mandataire: Ipsilon

(57) **Abrégé**

L'invention concerne un outil de chanfreinage (40) d'une couche (46) d'un câble (42) comprenant
- un système de réglage de la lame de coupe (76) monté sur un corps (58) de manière solidaire en rotation avec le corps (58), le système de réglage (76) étant configuré pour permettre un premier réglage de l'angle de coupe d'une lame de coupe (70) par rapport à un axe longitudinal (A) et au moins un deuxième réglage de la profondeur de coupe le long d'une direction radiale à l'axe longitudinal (A),
- un système de réglage de la cavité axiale (64) configuré pour varier une dimension transversale d'une cavité axiale du corps, prise transversalement à l'axe longitudinal (A), de manière à faire varier la dimension transversale de la cavité axiale (60) en correspondance avec le diamètre du câble.

## Description

### Domaine technique

La présente invention concerne un outil de chanfreinage d'une couche d'isolation d'un câble, notamment une couche d'isolation électrique d'un câble électrique.

### Arrière-plan technologique

L'invention peut s'appliquer de manière générale à tout corps de révolution mais est plus particulièrement intéressante dans le domaine des câbles électriques moyenne tension et haute tension comprenant des couches concentriques depuis leur périphérie vers leur âme.

Il est nécessaire d'effectuer un grand nombre d'opérations sur les câbles électriques pour les préparer en vue d'obtenir des jonctions entre conducteurs ou de raccorder un accessoire à une extrémité d'un câble électrique.

L'une des opérations de préparation d'un câble consiste à dénuder celui-ci en éliminant au moins l'une desdites couches sur une longueur définie. En particulier, la gaine externe est retirée sur une première longueur, la couche d'isolation est ensuite retirée sur une deuxième longueur inférieure à la première longueur de manière à faire apparaitre un noyau conducteur. La couche d'isolation est ainsi apparente, i.e. une face externe le long de l'axe longitudinal du câble et une face latérale perpendiculaire à cet axe longitudinal sont rendus accessibles.

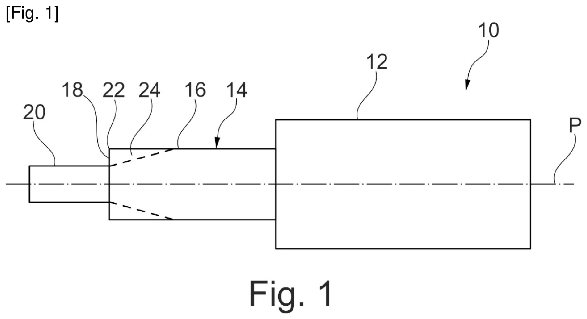

Le câble 10 ainsi obtenu à l'issue de cette opération de dénudage est visible sur la figure 1 comprenant la gaine externe 12, la couche d'isolation 14, avec ses faces externe 16 et latérale 18, et le noyau conducteur 20. L'axe longitudinal est référencé P.

Une autre des opérations de préparation du câble comprend le chanfreinage de l'arête 22 séparant la face externe 16 de la face latérale 18. Le chanfreinage correspond au retrait de la portion de couche 24 de la couche d'isolation 14.

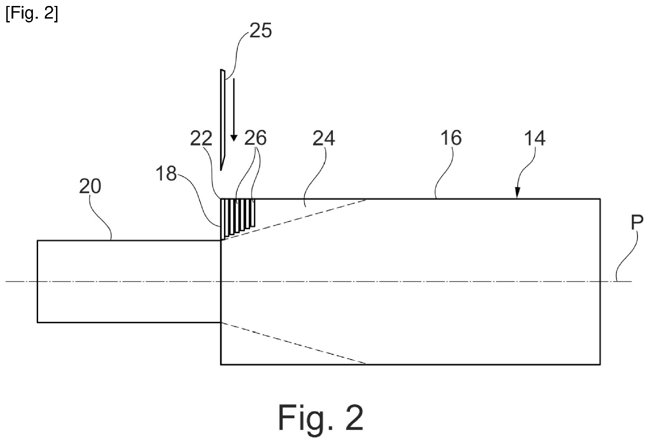

Pour réaliser ce chanfreinage, il existe une première méthode illustrée à la figure 2 utilisant une lame 25, du type couteau, déplacée le long d'une direction radiale à l'axe longitudinal A pour retirer des tranches 26 de la couche d'isolation 14. Chacune de ces tranches 26 s'étend dans un plan perpendiculaire à l'axe longitudinal A. Pour le retrait d'une tranche 26, le câble 10 est déplacé en rotation autour de l'axe longitudinal A et la lame 25 déplacée en translation le long d'un axe radial à l'axe longitudinal A. La découpe de ces tranches 26 se fait par passes successives en déplaçant la lame 25 le long de l'axe longitudinal A.

Un inconvénient majeur de cette première méthode est que l'état de surface de la couche d'isolation 14 après chanfreinage est insatisfaisant car il présente un profil en forme de marches depuis le noyau conducteur 20 vers la face externe de la couche d'isolation 14. Il est ainsi nécessaire de réaliser une opération supplémentaire de lissage de cette surface chanfreinée ce qui augmente le temps de l'opération de chanfreinage et donc les coûts associés à cette opération.

Une deuxième méthode de chanfreinage consiste à utiliser un outil 30 comprenant un corps 30 et une lame 34 montée de manière fixe sur le corps 32. La lame 34 s'étend le long d'une direction de coupe formant un angle non nul égal à l'angle de chanfrein à réaliser. Le corps 32 est rigide et comprend des poignées 36 permettant la mise en rotation du corps 32, et donc de la lame 34, autour de l'axe longitudinal A. Le chanfreinage est réalisé en tournant le corps 32 autour de l'axe longitudinal A et en déplaçant celui-ci en translation le long de ce même axe longitudinal A pour découper des tranches 38. Cet outil 30 fonctionne à la façon d'un taille-crayon. Lorsqu'observées dans un plan perpendiculaire à un axe radial à l'axe longitudinal A, les tranches 38 présentent une orientation identique à celle de la lame 34, et donc forment un angle avec l'axe longitudinal égal à l'angle de chanfrein à réaliser.

Les inconvénients de cette deuxième méthode sont que l'outil 30 est spécifique à un diamètre de câble, spécifique à un angle de chanfrein à réaliser et spécifique à une profondeur de coupe souhaitée. Il est ainsi nécessaire d'avoir un outil 30 différent pour chacun des câbles à chanfreiner. L'outil 30 n'apporte ainsi aucune flexibilité en matière d'usage.

Il existe également des outils de chanfreinage présentent un angle de coupe fixé par construction. Les documents DE 4205066 C2 et FR 2 173 819 A1 décrivent des exemples de tels outils. Autrement dit, l'orientation de la lame de coupe par rapport à l'axe longitudinal du câble est déterminée lors de la fabrication de l'outil et ne peut pas être modifiée par l'utilisateur. Ainsi, pour réaliser des chanfreins de différents angles, il est nécessaire de disposer d'autant d'outils différents que d'angles de chanfrein souhaités. Cette contrainte augmente les coûts d'équipement et complique la gestion du parc d'outils pour les opérateurs. De plus, certains outils connus permettent de varier la conicité de l'embout obtenu en agissant sur la trajectoire du couteau pendant l'opération de coupe, par exemple en éloignant progressivement le couteau de l'axe du câble. Toutefois, dans ces outils, le couteau lui-même reste orienté perpendiculairement ou parallèlement à l'axe du câble, et ce n'est pas l'orientation angulaire de la lame qui est modifiée. L'angle du cône résultant dépend alors de la vitesse d'éloignement radial du couteau et non d'un réglage direct de l'angle de coupe de la lame, ce qui génère un état de surface insatisfaisant sur le cône avec un profil en forme de marches.

Il existe donc un besoin pour un outil de chanfreinage d'un câble permettant une adaptation plus flexible à différents types de câbles et à différentes caractéristiques de chanfreins.

### Résumé de l'invention

Pour cela, l'invention propose un outil de chanfreinage d'une couche d'un câble comprenant :
- un corps délimitant une cavité axiale de réception d'un câble le long d'un axe longitudinal et configuré pour être déplacé en rotation autour du câble autour de l'axe longitudinal,
- une lame de coupe montée sur le corps de manière solidaire en rotation avec le corps, la lame de coupe s'étendant le long d'un axe de coupe formant un angle de coupe non nul avec l'axe longitudinal de manière à permettre un chanfreinage d'une extrémité d'une couche d'un câble disposé dans la cavité de réception lorsque le corps est déplacé en rotation autour de l'axe longitudinal et en translation le long de cet axe longitudinal pour former un déplacement hélicoïdale de la lame de coupe autour de cet axe longitudinal, caractérisé en ce que l'outil de chanfreinage comprend en outre :
- un système de réglage de la lame de coupe monté sur le corps de manière solidaire en rotation avec le corps, le système de réglage étant configuré pour permettre un premier réglage de l'angle de coupe de la lame de coupe par rapport à l'axe longitudinal et au moins un deuxième réglage de la profondeur de coupe le long d'une direction radiale à l'axe longitudinal,
- un système de réglage de la cavité axiale configuré pour varier une dimension transversale de la cavité axiale, prise transversalement à l'axe longitudinal, de manière à faire varier la dimension transversale de la cavité axiale en correspondance avec le diamètre du câble.

Les systèmes de réglage de la lame de coupe et de la cavité axiale permettent à l'outil de s'adapter à différentes tailles de câble ainsi qu'à différents paramètres de coupe pour le chanfreinage.

Le chanfreinage est réalisé en tournant le corps autour de l'axe longitudinal et en déplaçant celui-ci en translation le long de ce même axe longitudinal A pour réaliser un mouvement hélicoïdal afin de découper des tranches successives de la couche. La lame de coupe présente une orientation identique à l'angle de chanfrein à réaliser. Autrement dit, l'angle formé entre la lame de coupe, en particulier son arête de coupe, et l'axe longitudinal est identique à l'angle du chanfrein obtenu à la fin de l'opération de chanfreinage. Cet outil de chanfreinage ainsi fonctionne à la façon d'un taille-crayon.

Le corps peut comprendre des poignées permettant de faciliter la préhension de l'outil et donc faciliter la mise en rotation du corps.

On entend par « dimension transversale » le diamètre minimal du cercle circonscrit à l'intérieur des points de contact du corps avec le câble. Ainsi, si le corps comprend au moins trois points de contact lorsqu'observé dans un plan perpendiculaire à l'axe longitudinal, la dimension transversale est égale au diamètre du cercle passant par chacun de ces au moins trois points de contact.

Le câble comprend une pluralité de couches concentriques depuis sa périphérie vers son âme.

La couche du câble à chanfreiner est par exemple une couche d'isolation électrique entourant un noyau conducteur. Le noyau conducteur comprend un ou plusieurs conducteurs entourés d'une ou plusieurs couches, par exemple semi-conductrices. Une gaine externe entoure de préférence la couche d'isolation.

Le corps est en particulier monté sur et au contact de la couche à chanfreiner.

Le système de réglage de la lame de coupe se distingue des systèmes connus en ce qu'il permet de modifier directement l'orientation angulaire de la lame de coupe elle-même par rapport à l'axe longitudinal. Ainsi, l'angle de coupe α formé entre l'axe de coupe C et l'axe longitudinal A peut être varié par l'utilisateur avant ou pendant l'opération de chanfreinage. Cette caractéristique permet d'obtenir directement un chanfrein dont l'angle correspond à l'angle de coupe réglé, sans qu'il soit nécessaire de recourir à un déplacement progressif du couteau perpendiculairement à l'axe. L'état de surface du chanfrein obtenu est ainsi amélioré par rapport aux méthodes où l'angle du cône résulte d'un éloignement progressif du couteau. Cette configuration du système de réglage de la lame selon l'invention permet d'obtenir un chanfrein de haute qualité avec un état de surface lisse, sans profil en marches.

Selon un mode de réalisation de l'outil de chanfreinage, la lame de coupe comprend une arête de coupe allongée s'étendant le long de l'axe de coupe de sorte que l'arête de coupe est apte à découper chaque copeau de matière de la couche le long d'une direction formant un angle avec l'axe longitudinal égal à l'angle de coupe.

La lame de coupe s'étend principalement le long de l'axe de coupe. En d'autres termes, la lame de coupe présente une dimension longitudinale le long de l'axe de coupe supérieure à une dimension transversale à l'axe de coupe. Ainsi, l'arête de coupe est allongée et configurée à retirer un copeau de largeur supérieure. La longueur de l'arête de coupe est de préférence égale ou supérieure à la dimension du chanfrein le long de l'axe de coupe.

Ainsi, lorsqu'observées dans un plan perpendiculaire à un axe radial à l'axe longitudinal, les tranches successives de la couche découpées par la lame de coupe présentent une orientation identique à celle de la lame de coupe, et donc forment un angle avec l'axe longitudinal égal à l'angle de chanfrein à réaliser.

Selon un mode de réalisation de l'outil de chanfreinage, le système de réglage de la cavité axiale comprend deux mors formant le corps et déplaçables l'un par rapport à l'autre le long d'un axe de réglage de cavité, radial à l'axe longitudinal, de manière à varier la dimension transversale de la cavité axiale.

Selon un mode de réalisation de l'outil de chanfreinage, le système de réglage de la lame de coupe comprend un chariot monté sur le corps et déplaçable en translation par rapport au corps le long d'un axe de réglage de profondeur de coupe, radial à l'axe longitudinal, pour varier la distance entre lame de coupe et l'axe longitudinal afin de régler la profondeur de coupe.

Selon un mode de réalisation de l'outil de chanfreinage, la lame de coupe est montée sur le chariot de manière à être déplaçable en rotation autour d'un axe de réglage de l'angle de coupe, perpendiculaire à l'axe de réglage de profondeur de coupe, pour varier l'angle de coupe former entre l'axe de coupe et l'axe longitudinal.

Selon un mode de réalisation de l'outil de chanfreinage, le système de réglage de la lame de coupe comprend un indicateur visuel affichant la valeur de l'angle de coupe.

L'indicateur visuel peut être un capteur de position angulaire associé à un afficheur, par exemple digital. De manière alternative, l'indicateur visuel peut être une graduation permettant de visualiser l'angle formé par la lame par rapport à l'axe longitudinal.

Selon un mode de réalisation de l'outil de chanfreinage, celui-ci comprend en outre un système de verrouillage d'e l'un ou plusieurs parmi : le premier réglage, le deuxième réglage et/ou le réglage de la dimension transversale de la cavité axiale.

Selon un mode de réalisation de l'outil de chanfreinage, le corps comprend une pluralité d'éléments mobiles, par exemple des rouleaux, montés dans la cavité de manière à être au contact d'un câble disposé dans ladite cavité, chaque élément mobile étant configuré pour être déplacé en rotation autour d'une direction parallèle à l'axe longitudinal ou sensiblement parallèle pour former un angle faible mais non nul par rapport à l'axe longitudinal pour permettre la rotation du corps par rapport au câble et de permettre une avance hélicoïdale autour de l'axe longitudinal.

On entend par une direction « sensiblement parallèle » à l'axe longitudinal, le fait que la direction forme un angle par rapport à l'axe longitudinal inférieur ou égal à 15° et différent de 0°.

Les éléments mobiles sont par exemple des rouleaux rotatifs présentant une surface de réception du câble disposée à l'intérieur de la cavité axiale.

Le corps peut comprendre une pluralité d'éléments mobiles disposés dans une portion inférieure de la cavité axiale. Le corps peut comprendre des éléments mobiles additionnels dans une portion supérieure de la cavité axiale.

L'ensemble des éléments mobiles forme de préférence de trois à six points de contact avec le câble quand ce dernier est inséré à l'intérieur de la cavité axiale et que la dimension transversale de la cavité axiale est réglée en correspondance avec le câble.

De manière alternative aux éléments mobiles, le corps peut comprendre une ou plusieurs surfaces délimitant la cavité axiale et destinées à être au contact du câble. Chacune de ces surfaces est réalisée dans un matériau ou présente un revêtement destiné à limiter les frottements pour permettre la rotation du corps par rapport au câble.

L'invention propose également un procédé de chanfreinage d'une couche d'un câble, comprenant les étapes suivantes :
- dénuder un câble comprenant une couche de sorte que la couche présente une face externe apparente le long d'un axe principal et une face latérale annulaire s'étendant dans un plan sensiblement perpendiculaire à l'axe principal, la face externe et la face latérale étant séparée l'une de l'autre par une arête d'extrémité,
- positionner un outil de chanfreinage selon l'un quelconque des modes de réalisation précédents sur le câble dénudé de sorte que le corps est positionné autour de la face externe de la couche,
- régler la dimension transversale de la cavité au moyen du système de réglage de la cavité de manière à mettre le corps au contact de la face externe de la couche,
- régler l'angle de coupe à une valeur d'angle prédéterminée au moyen du système de réglage de la lame de coupe en variant l'angle formé entre la lame de coupe et l'axe longitudinal,
- régler la profondeur de coupe à une valeur de profondeur prédéterminée au moyen du système de réglage de la lame de coupe en variant la position de la lame de coupe le long d'une direction radiale à l'axe longitudinal,
- déplacer le corps en rotation autour de l'axe longitudinal et en translation le long de cet axe longitudinal pour chanfreiner l'arête d'extrémité de la couche d'isolant selon l'angle de coupe réglé et la profondeur de coupe réglée.

Selon un mode de réalisation du procédé de chanfreinage, le câble présente un noyau conducteur disposé au centre du câble de sorte que la couche isolante est disposée entre une gaine externe du câble et le noyau conducteur, le noyau conducteur s'étendant en saillie par rapport à la face latérale de la couche à l'issue de l'étape de dénudage, le noyau conducteur présentant une face externe de conducteur s'étendant le long de l'axe principal et définissant un rayon de noyau, la profondeur de coupe étant définie en déplaçant la lame de coupe le long de la direction radiale à l'axe longitudinal de manière à positionner une extrémité inférieure de la lame de coupe au niveau du rayon de noyaux.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 représente une vue de côté d'un câble électrique partiellement dénudé faisant apparaître une arête à chanfreiner ;
[fig. 2] La figure 2 représente une vue de côté d'un câble électrique comprenant une arête à chanfreiner en utilisant une première technique connue ;

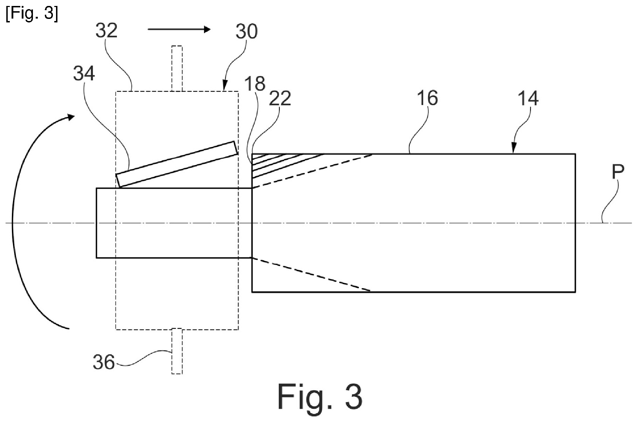

[fig. 3] La figure 3 représente une vue de côté d'un câble électrique comprenant une arête à chanfreiner en utilisant une deuxième technique connue ;
[fig. 4] La figure 4 représente une vue en perspective d'un outil de chanfreinage selon l'invention et d'un câble partiellement dénudé à chanfreiner ;
[fig. 5] La figure 5 représente une vue de côté de l'outil de chanfreinage de la figure 4;
[fig. 6] La figure 6 représente une vue de côté d'un câble électrique comprenant une arête à chanfreiner en utilisant avec l'outil de chanfreinage de la figure 4 ;
[fig. 7] La figure 7 représente une vue de côté du câble électrique de la figure 6 après une opération de chanfreinage de l'arête avec l'outil de chanfreinage de la figure 4 ;

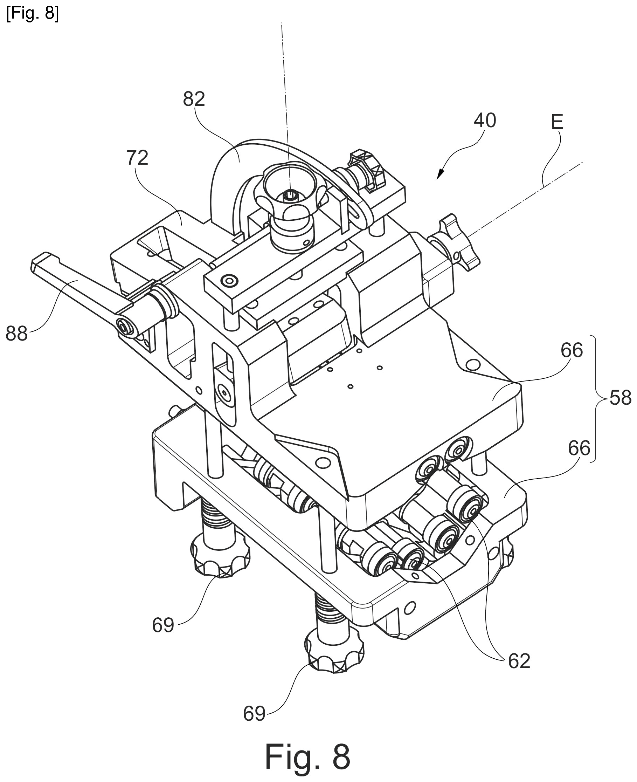

[fig. 8] La figure 8 représente une vue en perspective arrière de l'outil de chanfreinage de la figure 4 ;
[fig. 9] La figure 9 représente une vue en perspective d'une lame de coupe montée sur un bloc porte-lame de l'outil de chanfreinage de la figure 4 ;
[fig. 10] La figure 10 représente une vue en coupe de la lame de coupe et du bloc porte-lame de la figure 9 ;

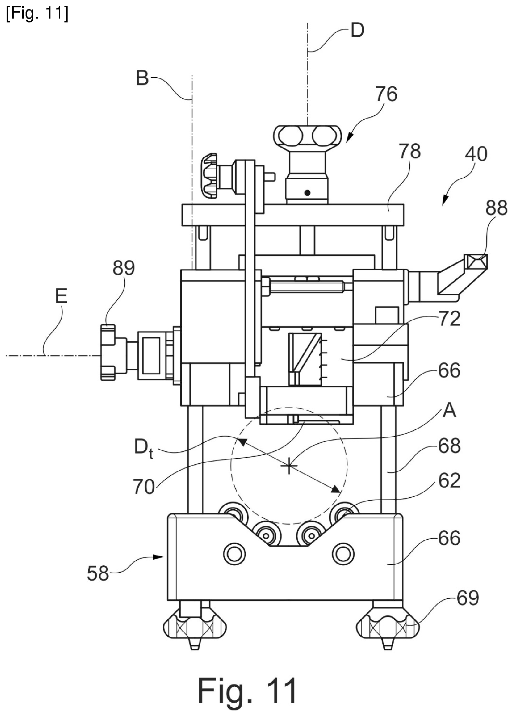

[fig. 11] La figure 11 représente une vue de face de l'outil de chanfreinage de la figure 4 faisant apparaitre une dimension transversale d'une cavité axiale de l'outil de chanfreinage accueillant le câble électrique ;

### Description de mode(s) de réalisation

Par souci de clarté, les mêmes références désignant les mêmes éléments selon l'état de l'art et selon l'invention sont utilisées pour toutes les figures.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

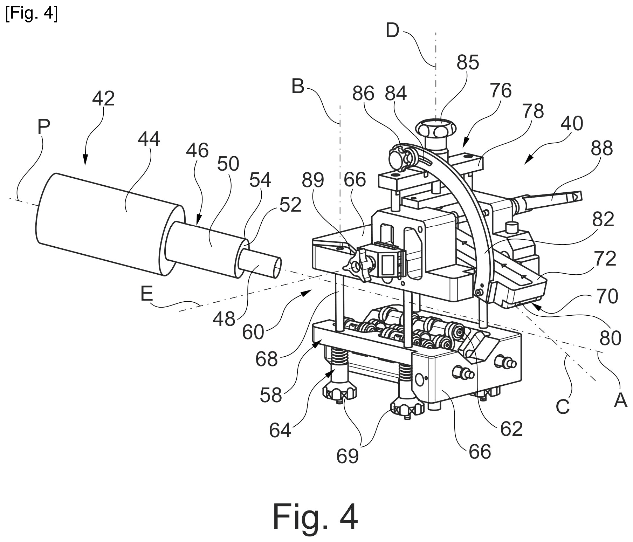

En référence à la figure 4, il est proposé un outil de chanfreinage 40 d'un câble 42. L'outil de chanfreinage 40 est un outil mobile destiné à être installé sur le câble 42. Ainsi, le câble 42 est destiné à être fixe avec l'outil de chanfreinage 40 monté sur le câble 42 de manière rotative pour réaliser le chanfrein autour de l'axe principal P du câble 42.

Le câble 42 s'étend le long d'un axe principal P et comprend plusieurs couches concentriques depuis sa périphérie vers son âme autour de l'axe principal P.

Le câble 42 comprend depuis sa périphérie vers son âme une gaine externe 44, une couche d'isolation 46 et un noyau conducteur 48.

En vue réaliser une jonction du câble 42 avec un autre câble ou bien de la raccorder avec un accessoire, par exemple une terminaison, le câble 42 doit être partiellement dénudé et chanfreiné.

Tel que décrit ci-avant, le dénudage du câble 42 en vue de son chanfreinage comprend l'élimination de la gaine externe 44 sur une première longueur. La couche d'isolation 46 est ensuite retirée sur une deuxième longueur inférieure à la première longueur de manière à faire apparaitre le noyau conducteur 48. La couche d'isolation 46 est ainsi apparente, i.e. une face externe 50 le long de l'axe principal P du câble et une face latérale 52 perpendiculaire à cet axe principal P sont rendus accessibles.

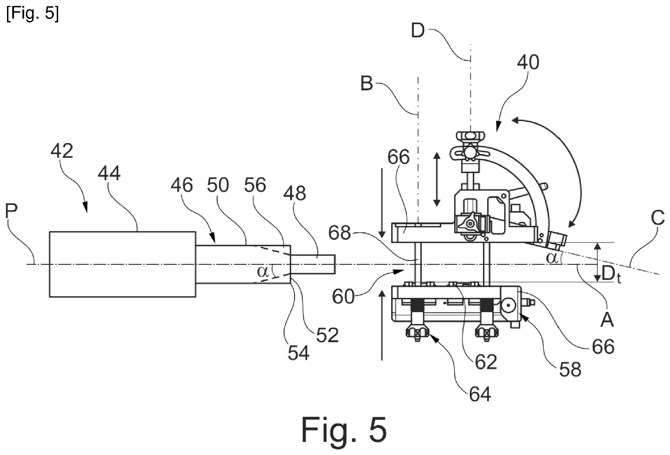

Le chanfreinage de la couche d'isolation 46 correspond au chanfreinage de l'arête 54 séparant la face externe 50 de la face latérale 52. Le chanfreinage correspond au retrait de la portion de couche 56 de la couche d'isolation 46, visible à la figure 5. La portion de couche 56 retirée est conique.

L'outil de chanfreinage 40 comprend un corps 58 délimitant une cavité axiale 60 de réception d'un câble 42 le long d'un axe longitudinal A. C'est la couche d'isolation 46 qui est insérée en particulier dans la cavité axiale 60.

Lorsque le câble 42 est positionné dans la cavité axiale 60 dans sa position finale dans laquelle le chanfreinage est réalisé, l'axe longitudinal A est confondu avec l'axe principal P.

Le corps 58 comprend une pluralité d'éléments mobiles 62 montés dans la cavité axiale 60. Chaque élément mobile 62 comprend une surface de contact disposé dans la cavité axiale 60 de manière à être au contact d'un câble 42 disposé dans ladite cavité axiale 60. Chaque élément mobile 62 est configuré pour être déplacé en rotation autour d'une direction sensiblement parallèle à l'axe longitudinal A pour permettre la rotation et une avance du corps 58 par rapport au câble 42.

Les éléments mobiles 62 forment ensemble une surface de contact, une pluralité de points ou de lignes de contact pour permettre au corps 58 d'être au contact de la couche d'isolation 46.

L'outil de chanfreinage 40 comprend en outre une lame de coupe 70 monté sur un bloc porte-lame 72. La lame de coupe 70 est montée sur le corps 58 de manière solidaire en rotation avec le corps 58. Ainsi, une rotation du corps 58 autour de l'axe longitudinal A entraine une rotation de la lame de coupe 70 synchronisée et identique, i.e. d'un même angle de rotation.

La lame de coupe 70 s'étend le long d'un axe de coupe C formant un angle de coupe α non nul avec l'axe longitudinal A. L'angle de coupe est également différent de 90° de sorte que le lame de coupe n'est pas orientée perpendiculairement à l'axe longitudinal A, comme l'exemple de la figure 2.

L'angle de coupe α est de préférence compris entre 3 et 45°.

Cette orientation de la lame de coupe 70 selon l'angle de coupe α permet un chanfreinage de l'arête 54 de la couche d'isolation 46 lorsque le corps est déplacé en rotation autour de l'axe longitudinal A et en translation le long de cet axe longitudinal A. Le mouvement réalisé par le corps 58 est semblable à celui d'un taille-crayon. Le copeau, ou tranche 55, découpé à chaque passage de la lame est donc orienté par rapport à l'axe longitudinal A de l'angle de coupe α, lorsqu'observé dans un plan incluant l'axe longitudinal et l'axe de coupe C.

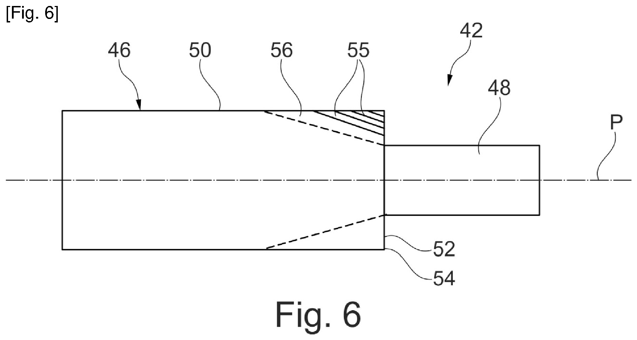

Cette orientation des tranches 55 découpées à chaque passage de la lame de coupe 70 est illustré à la figure 6.

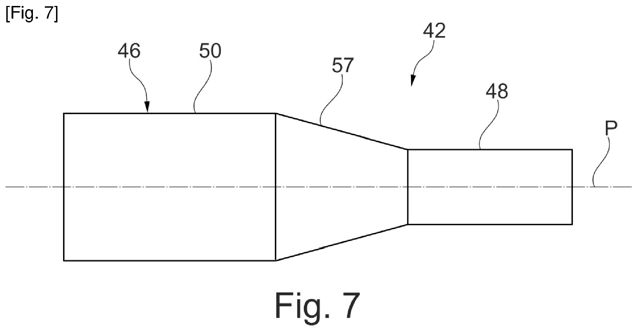

La couche d'isolation 46 chanfreinée est également illustrée à la figure 7 lorsque l'ensemble des passages de la lame de coupe 70 a été réalisé. En d'autres termes, l'ensemble des copeaux, ou tranches 55, ont été retirés. Un chanfrein 57 est ainsi obtenu.

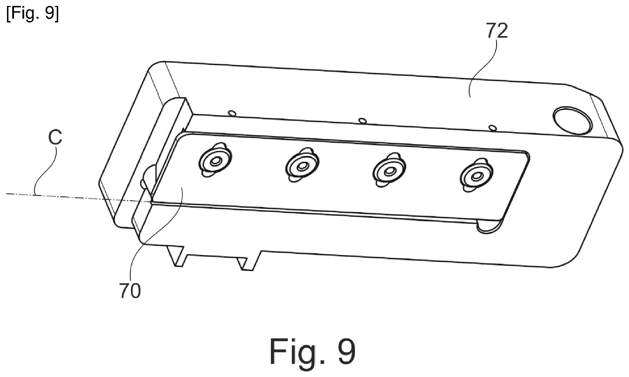

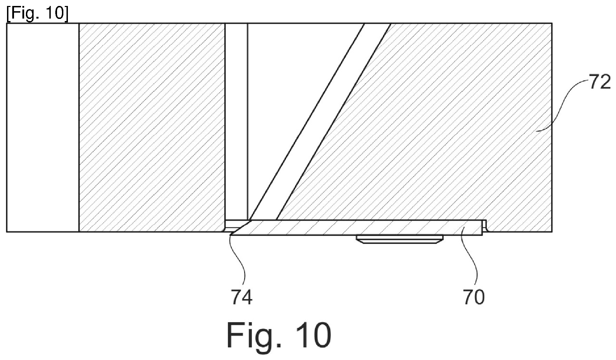

La lame de coupe 70 est illustrée en détail aux figures 9 et 10.

La lame de coupe 70 comprend une arête de coupe 74 allongée s'étendant le long de l'axe de coupe C. L'arête de coupe 74 est apte à découper chaque copeau de matière de la couche d'isolation 46 le long d'une direction formant un angle avec l'axe longitudinal égal à l'angle de coupe α.

L'outil de chanfreinage 40 comprend en outre un système de réglage de la cavité axiale 64. Ce système de réglage de la cavité axiale 64 est configuré pour varier une dimension transversale Dt de la cavité axiale 60, prise transversalement à l'axe longitudinal A. La variation de cette dimension transversale Dt permet de faire correspondre la dimension transversale Dt de la cavité axiale avec le diamètre du câble 42, en particulier avec le diamètre de la couche d'isolation 46. Autrement dit, varier la dimension transversale Dt de la cavité axiale 60 permet de réduire ou d'augmenter cette cavité axiale 60 de manière à recevoir des câbles 42 de diamètres différents.

Le système de réglage de la cavité axiale 64 comprend deux mors 66 formant le corps 58. Les mors 66 sont déplaçables l'un par rapport à l'autre le long d'un axe de réglage de cavité B, radial à l'axe longitudinal A, de manière à varier la dimension transversale Dt de la cavité axiale 60.

La dimension transversale Dt est visible sur la figure 9 qui illustre le cercle circonscrit entre les points de contact du corps avec le câble 42. La dimension transversale Dt est le diamètre de ce cercle.

Le système de réglage de la cavité axiale 64 comprend en outre une pluralité de colonnes 66 s'étendant entre chacun des mors 66. Les colonnes 68 s'étendent en périphérie de la cavité axiale 60 pour ne pas interférer avec le câble 42.

L'un des mors 66 est monté fixe par rapport aux colonnes 68 et l'autre des mors 66 est monté mobile en translation par rapport aux colonnes 68 le long de l'axe de réglage de cavité B. Le déplacement des mors 66 par rapport aux colonnes 68 le long de l'axe de réglage de cavité B permet un rapprochement ou un éloignement des mors 66 et donc une variation de la dimension transversale Dt.

Le réglage de la dimension transversale Dt est réalisé au moyen de premières molettes de réglage 69 montées sur chacune des colonnes 68 permettant de régler et verrouiller la position du mors 66 par rapport à ladite colonne 68. Les première molettes de réglage 69 forment un système de serrage ou de verrouillage du réglage de la cavité.

Les colonnes 68 peuvent être filetées et les premières molettes de réglage 69 peuvent comprendre un taraudage apte à coopérer avec le filetage des colonnes 68 pour maintenir un effort de serrage de la première molette de réglage 69 sur le mors 66 afin de verrouiller la position du mors 66 par rapport à la colonne 68 et donc par rapport au câble 42.

L'outil de chanfreinage 40 comprend en outre un système de réglage de la lame de coupe 76 monté sur le corps 58 de manière solidaire en rotation avec le corps 58. En particulier, le système de réglage de la lame de coupe 76 est monté sur un mors 66 du corps 58.

Le système de réglage de lame de coupe 76 comprend un chariot 78 monté sur le corps 58 et déplaçable en translation par rapport au corps 58 le long d'un axe de réglage de profondeur de coupe D.

L'axe de réglage de profondeur de coupe D est radial à la l'axe longitudinal A. L'axe de réglage de profondeur de coupe D est ici parallèle à l'axe de réglage de cavité B.

De manière alternative, l'axe de réglage de profondeur de coupe D peut ne pas être parallèle à l'axe de réglage de cavité B. En d'autres termes, le réglage de la dimension transversale Dt de la cavité axiale 60 peut être réalisé sur un secteur angulaire différent de celui de la profondeur de coupe, lorsqu'observé dans un plan perpendiculaire à l'axe longitudinal A.

Le système de réglage de lame de coupe 76 comprend en outre une deuxième molette de réglage 85 configurée pour régler la position axiale du chariot 78 le long de l'axe de réglage de profondeur de coupe D.

La lame de coupe 70 est montée de manière solidaire en translation par rapport au chariot 78. La translation du chariot 78 par rapport au corps 58 le long d'un axe de réglage de profondeur de coupe D permet de varier la distance entre lame de coupe et l'axe longitudinal A afin de régler la profondeur de coupe.

A titre d'exemple, la profondeur de coupe peut être réglée en déplaçant la lame de coupe le long de l'axe de réglage de profondeur de coupe D de manière à positionner une extrémité inférieure 80 de la lame de coupe 70 au niveau du rayon de noyau conducteur 48. De cette manière le rayon minimal du chanfrein de l'arête 54 sera sensiblement égal au rayon du noyau conducteur de manière à avoir une continuité de rayon entre le noyau conducteur 48 et la couche d'isolation 46.

La lame de coupe 70 est montée sur le chariot 78 de manière à être déplaçable en rotation par rapport au chariot 78 autour d'un axe de réglage de l'angle de coupe E. Ainsi, la rotation de la lame de coupe 70 est réglable par rapport au chariot 78 et donc, par extension, par rapport au corps 58.

La rotation de la lame de coupe 70 autour de l'axe de réglage de l'angle de coupe E permet de varier l'angle de coupe α par rapport à l'axe longitudinal A.

L'axe de réglage de l'angle de coupe E est perpendiculaire à l'axe de réglage de profondeur de coupe D.

La lame de coupe 70, et le bloc porte-lame 72, sont montés sur un bras 82 s'étendant le long d'une direction circulaire dont le centre est confondu avec l'axe de réglage de l'angle de coupe E. Le bras 82 comprend une lumière 84 s'étendant également le long de la direction circulaire. Une troisième molette de réglage 89 étant monté axialement à l'axe de réglage de l'angle de coupe E pour régler la position angulaire de la lame de coupe 70 et un bouton de verrouillage 86 étant monté dans la lumière 84 et configurée pour serrer le bras 82 contre le chariot 78.

Le système de réglage de lame de coupe 76 est ainsi configuré pour permettre un premier réglage de l'angle de coupe α de la lame de coupe 70 autour de l'axe de réglage de l'angle de coupe E et un deuxième réglage de la profondeur de coupe le long de l'axe de réglage de profondeur de coupe D.

Une manette de verrouillage 88 est disposée entre le chariot 78 et le corps 58 de manière à verrouiller ou déverrouiller les réglages entre le chariot 78 et le corps 58, i.e. le réglage de l'angle de coupe et le réglage de la profondeur de coupe. La manette de verrouillage 88 permet ainsi de garantir que les réglages effectués sont conservés.

Le bouton de verrouillage 86 forme un système de serrage et de verrouillage du réglage de l'angle de coupe. La manette de verrouillage 88 forme un système de serrage ou de verrouillage du réglage de la profondeur de coupe et du réglage de l'angle de coupe.

Un exemple de mise en œuvre de l'outil de chanfreinage 40 est décrit ci-après.

Le câble 42 est tout d'abord dénudé de manière à rendre la face externe 50 de la couche d'isolation 46 et la face latérale 52 de la couche d'isolation 46 apparentes. Cette opération de dénudage vise à obtenir un câble 42 tel que visible sur la figure 6.

Le corps 58 de l'outil de chanfreinage 40 est ensuite positionné sur le câble 42 de sorte que la câble 42 est positionnée à l'intérieur de la cavité axiale 60.

La position axiale du corps 58 le long de l'axe principal P est ensuite ajustée pour mettre la face externe 50 de la couche d'isolation en regard du corps 58.

La dimension transversale Dt est ensuite réglée en rapprochant les deux mors 66 l'un de l'autre de manière à enserrer le câble 42 entre les deux mors 66. La couche d'isolation 46 repose contre les éléments mobiles 62.

Ce réglage de la dimension transversale Dt est ensuite verrouillé au moyen des premières molettes de réglage 69.

La manette de verrouillage 88 et le bouton de verrouillage 86 sont déverrouillées de manière à permettre le réglage de la lame de coupe 70.

L'angle de coupe α est ensuite réglé à une valeur d'angle prédéterminée en déplaçant en rotation la lame de coupe 70 autour de l'axe de réglage de l'angle de coupe C au moyen de la troisième molette de réglage89.

Le bras 82 est ensuite verrouillé au moyen du bouton de verrouillage 86 pour verrouiller le réglage de l'angle de coupe.

La profondeur de coupe est ensuite réglée au moyen de la deuxième molette de réglage 85. Cette profondeur de coupe est par exemple réglée en déplaçant la lame de coupe 70 le long de l'axe de réglage de profondeur de coupe de manière à positionner l'extrémité inférieure 80 de la lame de coupe 70 au niveau du rayon du noyau conducteur 48.

Le réglage de l'angle de coupe peut être réalisé avant de positionner l'outil de chanfreinage sur le câble.

Le chariot 78 est ensuite verrouillé au moyen de la manette de verrouillage 88 pour verrouiller les réglages de la profondeur de coupe et de l'angle de coupe.

Le corps 58 est ensuite déplacé en rotation autour de l'axe longitudinal A et en translation le long de cet axe longitudinal A en exerçant un effort vers le câble 42 le long de l'axe longitudinal pour initier le chanfreinage.

## Revendications

1. Outil de chanfreinage (40) d'une couche (46) d'un câble (42) comprenant :
- un corps (58) délimitant une cavité axiale (60) de réception d'un câble (42) le long d'un axe longitudinal (A) et configuré pour être déplacé en rotation autour du câble (42) autour de l'axe longitudinal (A),
- une lame de coupe (70) montée sur le corps (58) de manière solidaire en rotation avec le corps (58), la lame de coupe (70) s'étendant le long d'un axe de coupe (C) formant un angle de coupe (α) non nul avec l'axe longitudinal (A) de manière à permettre un chanfreinage d'une extrémité d'une couche (46) d'un câble (42) disposé dans la cavité axiale (60) lorsque le corps (58) est déplacé en rotation autour de l'axe longitudinal (A) et en translation le long de cet axe longitudinal (A) pour former un déplacement hélicoïdal de la lame de coupe (70) autour de cet axe longitudinal (A), **caractérisé en ce que** l'outil de chanfreinage (40) comprend en outre :
- un système de réglage de la lame de coupe (76) monté sur le corps (58) de manière solidaire en rotation avec le corps (58), le système de réglage (76) étant configuré pour permettre un premier réglage de l'angle de coupe (α) de la lame de coupe (70) par rapport à l'axe longitudinal (A) et au moins un deuxième réglage de la profondeur de coupe le long d'une direction radiale à l'axe longitudinal (A),
- un système de réglage de la cavité axiale (64) configuré pour varier une dimension transversale (Dt) de la cavité axiale, prise transversalement à l'axe longitudinal (A), de manière à faire varier la dimension transversale (Dt) de la cavité axiale (60) en correspondance avec le diamètre du câble.

2. Outil de chanfreinage (40) selon la revendication 1, dans lequel la lame de coupe (70) comprend une arête de coupe (74) allongée s'étendant le long de l'axe de coupe (C) de sorte que l'arête de coupe (74) est apte à découper chaque copeau de matière de la couche (46) le long d'une direction formant un angle avec l'axe longitudinal égal à l'angle de coupe (α).

3. Outil de chanfreinage (40) selon la revendication 1 ou 2, dans lequel le système de réglage de la cavité axiale (64) comprend deux mors (66) formant le corps (58) et déplaçables l'un par rapport à l'autre le long d'un axe de réglage de cavité (B), radial à l'axe longitudinal (A), de manière à varier la dimension transversale (Dt) de la cavité axiale (60).

4. Outil de chanfreinage (40) selon l'une des revendications 1 à 3, dans lequel le système de réglage de la lame de coupe 76) comprend un chariot (78) monté sur le corps (58) et déplaçable en translation par rapport au corps (58) le long d'un axe de réglage de profondeur de coupe (D), radial à l'axe longitudinal (A), pour varier la distance entre la lame de coupe (70) et l'axe longitudinal (A) afin de régler la profondeur de coupe.

5. Outil de chanfreinage (40) selon la revendication 4, dans lequel la lame de coupe (70) est montée sur le chariot (78) de manière à être déplaçable en rotation autour d'un axe de réglage de l'angle de coupe (E), perpendiculaire à l'axe de réglage de profondeur de coupe (D), pour varier l'angle de coupe (α) former entre l'axe de coupe (C) et l'axe longitudinal (A).

6. Outil de chanfreinage (40) selon l'une quelconque des revendications précédentes, dans lequel le système de réglage de la lame de coupe (76) comprend un indicateur visuel affichant la valeur de l'angle de coupe (α).

7. Outil de chanfreinage (40) selon l'une quelconque des revendications précédentes, comprenant un système de verrouillage de l'un ou plusieurs parmi : le premier réglage, le deuxième réglage et/ou le réglage de la dimension transversale (Dt) de la cavité axiale (60).

8. Outil de chanfreinage (40) selon l'une quelconque des revendications précédentes, dans lequel le corps (58) comprend une pluralité d'éléments mobiles (62), par exemple des rouleaux, montés dans la cavité axiale (60) de manière à être au contact d'un câble (42) disposé dans ladite cavité axiale (60), chaque élément mobile (62) étant configuré pour être déplacé en rotation autour d'une direction parallèle ou sensiblement parallèle à l'axe longitudinal (A) pour permettre la rotation du corps (58) par rapport au câble (42).

9. Procédé de chanfreinage d'une couche (46) d'un câble (42), comprenant les étapes suivantes :
- dénuder un câble (42) comprenant une couche (46) de sorte que la couche (46) présente une face externe (50) apparente le long d'un axe principal (P)et une face latérale (52) annulaire s'étendant dans un plan sensiblement perpendiculaire à l'axe principal (P), la face externe (50) et la face latérale (52) étant séparées l'une de l'autre par une arête (54) d'extrémité,
- positionner un outil de chanfreinage (40) selon l'une quelconque des revendications précédentes sur le câble (42) dénudé de sorte que le corps (58) est positionné autour de la face externe (50) de la couche (46),
- régler la dimension transversale (Dt) de la cavité au moyen du système de réglage de la cavité axiale (64) de manière à mettre le corps (58) au contact de la face externe (50) de la couche (46),
- régler l'angle de coupe (α) à une valeur d'angle prédéterminée au moyen du système de réglage de la lame de coupe (76) en variant l'angle formé entre la lame de coupe (70) et l'axe longitudinal (A),
- régler la profondeur de coupe à une valeur de profondeur prédéterminée au moyen du système de réglage de la lame de coupe (76) en variant la position de la lame de coupe (70) le long d'une direction radiale à l'axe longitudinal (A),
- déplacer le corps (58) en rotation autour de l'axe longitudinal (A) et en translation le long de cet axe longitudinal (A) pour chanfreiner l'arête (54) d'extrémité de la couche (46) selon l'angle de coupe (α) réglé et la profondeur de coupe réglée.

10. Procédé de chanfreinage selon la revendication 9, dans lequel le câble (42) présente un noyau conducteur (48) disposé au centre du câble (42) de sorte que la couche (46) est disposée entre une gaine externe (44) du câble (42) et le noyau conducteur (48), le noyau conducteur (48) s'étendant en saillie par rapport à la face latérale (52) de la couche à l'issue de l'étape de dénudage, le noyau conducteur (48) présentant une face externe de conducteur s'étendant le long de l'axe principal (P) et définissant un rayon de noyau, la profondeur de coupe étant définie en déplaçant la lame de coupe (70) le long de la direction radiale à l'axe longitudinal (A) de manière à positionner une extrémité inférieure (80) de la lame de coupe (70) au niveau du rayon de noyau.
